(19) Europäisches Patentamt
European Patent Office
Office européen des brevets

(11) **EP 2 863 475 B1**

(12) **EUROPEAN PATENT SPECIFICATION**

(45) Date of publication and mention
of the grant of the patent:
**25.03.2020 Bulletin 2020/13**

(51) Int Cl.:
*H01Q 1/32* *(2006.01)*      *G01S 13/93* *(2020.01)*
*H01Q 1/42* *(2006.01)*      *H01Q 13/02* *(2006.01)*
*H01Q 19/08* *(2006.01)*

(21) Application number: **13189519.5**

(22) Date of filing: **21.10.2013**

(54) **Radar wave guiding arrangement**

Radarwellenleiteranordnung

Dispositif de guide d'ondes radar

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.04.2015 Bulletin 2015/17**

(73) Proprietor: **Veoneer Sweden AB
447 83 Vårgårda (SE)**

(72) Inventor: **MÖBIUS, Arnold
85579 Neubiberg (DE)**

(74) Representative: **Kransell & Wennborg KB
P.O. Box 27834
115 93 Stockholm (SE)**

(56) References cited:
**EP-A1- 1 139 489**

• **PHILIPS B ET AL: "Design and performance of
profiled dielectric loaded horns", IEE
PROCEEDINGS: MICROWAVES, ANTENNAS
AND PROPAGATION, IEE, STEVENAGE, HERTS,
GB, vol. 141, no. 5, 1 October 1994 (1994-10-01),
pages 337-41, XP006001954, ISSN: 1350-2417,
DOI: 10.1049/IP-MAP:19941266**

• **CLARRICOATS P J B ET AL: "Broadband
low-crosspolarisation horn", ELECTRONICS
LETTERS, IEE STEVENAGE, GB, vol. 30, no. 25,
8 December 1994 (1994-12-08), pages 2085-2086,
XP006001474, ISSN: 0013-5194, DOI:
10.1049/EL:19941483**

• **OLVER, A.D; CLARRICOATS, P.J.B; RAGHAVAN,
K.: "Dielectric cone loaded horn antennas", IEE
PROCEEDINGS: MICROWAVES, ANTENNAS
AND PROPAGATION, IEE, STEVENAGE, HERTS,
GB, vol. 135, no. 3, 6027H, June 1988 (1988-06),
pages 158-162, XP1384006,**

• **NAIR R A ED - INSTITUTE OF ELECTRICAL AND
ELECTRONICS ENGINEERS: "GAIN
ENHANCEMENT IN DIELECTRIC CORE FILLED
MULTIMODE CONICAL HORN ANTENNA",
PROCEEDINGS OF THE ANTENNAS AND
PROPAGATION SOCIETY INTERNATIONAL
SYMPOSIUM (APSIS). ANN ARBOR, JUNE 28 -
JULY 2, 1993; [PROCEEDINGS OF THE
ANTENNAS AND PROPAGATION SOCIETY
INTERNATIONAL SYMPOSIUM (APSIS)], NEW
YORK, IEEE, US, vol. 3, 28 June 1993 (1993-06-28),
pages 1671-1674, XP000452590,**

• **HONGMIN LEE ET AL: "A compact dielectric
rod-loaded conical horn antenna for
millimeter-wave apllications", MILLIMETER
WAVES (GSMM), 2012 5TH GLOBAL SYMPOSIUM
ON, IEEE, 27 May 2012 (2012-05-27), pages
182-185, XP032242969, DOI:
10.1109/GSMM.2012.6314031 ISBN:
978-1-4673-1302-5**

**EP 2 863 475 B1**

**Description**

**TECHNICAL FIELD**

The invention relates to radar wave guiding arrangements, and particularly to a radar wave guiding arrangement for a vehicle radar system.

**BACKGROUND**

In general terms, a horn antenna (also known as microwave horn, or cone antenna) is an antenna that consists of a flaring metal waveguide shaped like a horn to direct radio waves in a beam. Horns are widely used as antennas at ultra-high frequencies (UHF) and microwave frequencies, above 300 MHz. Horn antennas may further be used as feeders (called feed horns) for larger antenna structures, such as parabolic antennas, as standard calibration antennas to measure the gain of other antennas, and as directive antennas for such devices as radar guns, automatic door openers, and microwave radiometers. Some advantages of horn antennas are that they provide moderate directivity (gain), low standing wave ratio (SWR), broad bandwidth, and allow simple construction and adjustment.

US 2012/0206312 A1 discloses a horn antenna with a dielectric filling body. In more detail, US 2012/0206312 A1 discloses a horn antenna for a radar device. The horn antenna comprises a metal body containing a tubular hollow waveguide section which opens into a hollow horn section. A dielectric filling body fills up the inner space of the horn section. A dielectric cover is provided to surround the metal body and to cover the filling body at the aperture of the horn section as a protective covering for the horn antenna. One object of US 2012/0206312 A1 is to provide a horn antenna that is configured to be arranged so as to protrude in a measurement environment, protected from highly aggressive process environments and usable over a wide temperature range of, e.g., -40° C. to +80° C.

The horn antenna US 2012/0206312 A1 has an elongated shape, i.e., the length (as defined in the longitudinal direction of the horn antenna) is larger than the width (as defined in the transversal direction of the horn antenna). It is thus cumbersome to place such a horn antenna in a vehicle, such as an automotive vehicle, where available space is scarce.

"Design and performance of profiled dielectric loaded horns" by B. Philips and A. D. Oliver in IEE Proceedings of Microwaves, Antennas and Propagation, vol. 141, no. 5, 1 October 1994, pages 337-341 relates to profiled dielectric loaded horns with the aim of obtaining low peak crosspolar level and high aperture efficiency, see Abstract. This document discloses that profiled dielectric horns can be used in antenna systems where small mass and volume are desirable, and where physical constraints require a compact feed design.

"A Compact Dielectric Rod-loaded Conical Horn Antenna for Millimeter-Wave Applications" by Hongmin Lee and Hyungsup Lee in the proceedings of the 2012 5th Global Symposium on Millimeter Waves (GSMM 2012), Harbin China, May 27-30, 2012, pages 182-185 relates to a new design concept for compact conical horn antennas exhibiting high directive gain and low cross-polarization.

Hence, there is still a need for an improved radar wave guiding arrangement comprising a horn antenna.

**SUMMARY**

The invention is defined in claim 1.

An object of embodiments herein is to provide an improved radar wave guiding arrangement comprising a horn antenna.

The inventor of the enclosed embodiments has through a combination of practical experimentation and theoretical derivation realized that by simply changing the dimensions of the horn antenna so as to make the horn antenna less elongated and thus more compact could negatively affect the directional properties of the radar wave guiding arrangement. A particular object is therefore to provide a radar wave guiding arrangement comprising a horn antenna and having a compact shape but still showing desired directional properties.

According to a first aspect there is presented a radar wave guiding arrangement for a vehicle radar system. The radar wave guiding arrangement comprises a horn-shaped housing. The housing comprises first walls enclosing a cavity. The radar wave guiding arrangement comprises a dielectric insert. The dielectric insert comprises second walls and is positioned inside the cavity. The first walls and the second walls form at least one waveguide channel for guiding radar waves through the horn-shaped housing. The insert and the at least one waveguide channel have different wave distribution characteristics.

Advantageously, this provides an improved radar wave guiding arrangement comprising a horn antenna.

Advantageously, this provides a compact radar wave guiding arrangement comprising a horn antenna showing desired directional properties.

Advantageously, the radar wave guiding arrangement provides a broad angle radiation in azimuth, at least ±70° from the longitudinal axis of the radar wave guiding arrangement, whilst still having a shallow shape.

According to a second aspect there is presented an automotive vehicle comprising a radar wave guiding arrangement according to the first aspect.

It is to be noted that any feature of the first and second aspects may be applied to any other aspect, wherever appropriate. Likewise, any advantage of the first aspect may equally apply to the second aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig 1a shows the field distribution of a shallow angle horn antenna;
Fig 1b shows the far field of the shallow angle horn antenna of Fig 1a;
Fig 2 shows the field distribution of a lens horn antenna;
Fig 3a shows the field distribution of a radar wave guiding arrangement according to an example;
Fig 3b shows the far field of the radar wave guiding arrangement of Fig 3a;
Figs 4 and 6-8 show radar wave guiding arrangements according to examples;
Fig.5 shows a radar wave guiding arrangement according to an embodiment of the invention; and
Fig 9 schematically illustrates a vehicle comprising a radar wave guiding arrangement as shown in any of Fig 3a, and Fig 4-8.

## DETAILED DESCRIPTION

The embodiments presented herein concern an antenna for automotive radars. Whereas in the past these antennas had to mechanically or electronically steer the beam into the direction of interest, modern radar antennas perform the scanning by means of digital beam forming. This means that in the plane of the scan - usually the horizontal plane - a broad beam illuminating the entire angle of interest has to be radiated. This angle can approach 180 degrees. In the vertical direction (i.e., in the elevation direction) the scanning range is smaller or not existing. The beam has to be well focused. The antenna as part of the sensor has to be integrated into a housing and be protected by a radome. Examples of antennas which currently have been applied for this purpose include, for example, printed antennas such as microstrip lines and patches, slot antennas, and horn antennas with or without lens(es). Printed and slot antennas suffer problems of having high ohmic losses, being critical to fabrication tolerances at higher frequencies of about 77 GHz, not always being able to achieve the required broad beam, and/or experience a perturbation of the far field pattern by the radome.

In general terms, a horn antenna may be used to transmit radio waves from a waveguide (a metal pipe used to carry radio waves) out into space, and/or to collect radio waves into a waveguide for reception. In general terms, a horn antenna comprises a short length of rectangular or cylindrical metal tube (the waveguide), closed at one end, flaring into an open-ended conical or pyramidal shaped horn on the other end.

In general terms, during operation of the horn antenna the waves travel down a horn as spherical wavefronts, with their origin at the apex of the horn antenna, a point also called the phase center. The pattern of electric and magnetic fields at the aperture plane at the mouth of the horn antenna, which determines the radiation pattern, is a scaled-up reproduction of the fields in the waveguide. However, because the wavefronts are spherical, the phase increases smoothly from the edges of the aperture plane to the center, because of the difference in length of the center point and the edge points from the apex point. The difference in phase between the center point and the edges is called the phase error. This phase error, which increases with the flare angle, reduces the gain and increases the beamwidth, giving horn antennas wider beamwidths than similar-sized plane-wave antennas, such as parabolic dishes.

Horn antennas, especially those of rectangular cross section, achieve the desired broad azimuthal radiation pattern, especially when the radiated electric field component is horizontally polarized and the transverse aperture is narrow. In the elevation pattern, however, the radiated beam has to be well focused; the more focused the larger the aperture has to be. However the horn feed wave guide typically is monomode and thus has a comparatively small cross section and the need for integrating the antenna into the relatively flat sensor housing drastically limits the allowed horn length. These three requirements lead to horns with a shallow horn angle.

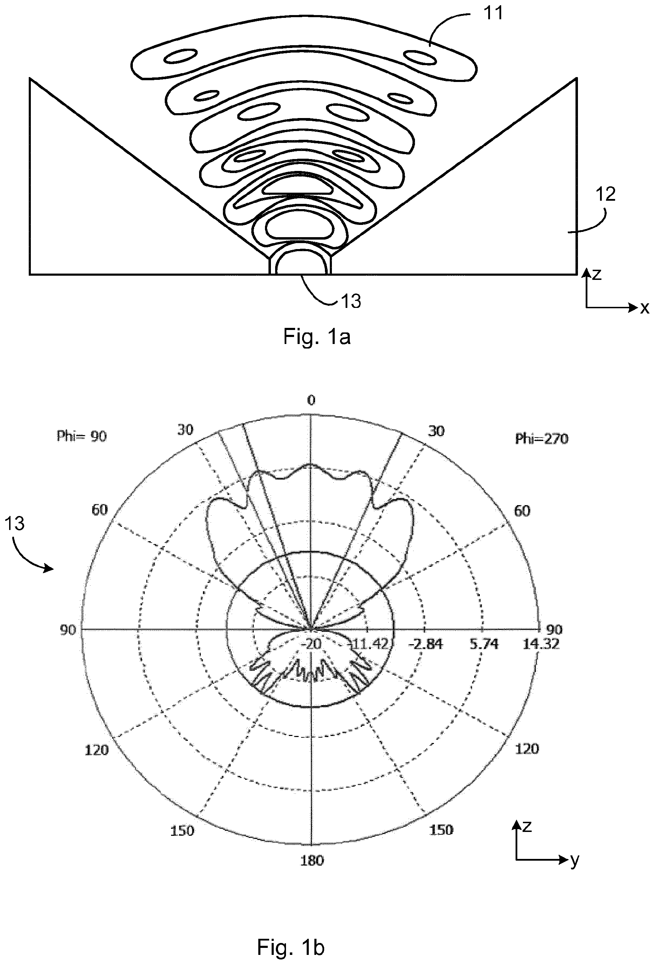

Figs 1a and 1b show the field distribution 11 (Fig 1a) and far field 14 (Fig 1b) of such a shallow angle horn antenna 12 with the excitation port 13 at the monomode feed wave guide. The field does not spread over the cross section (i.e., in the x-direction) but remains focused in the vicinity of the longitudinal axis (i.e., the z-direction) and thus only a fraction of the aperture is illuminated which leads to an undesired broadening of the radiated beam, up to $\pm 60°$ as seen in Fig 1b.

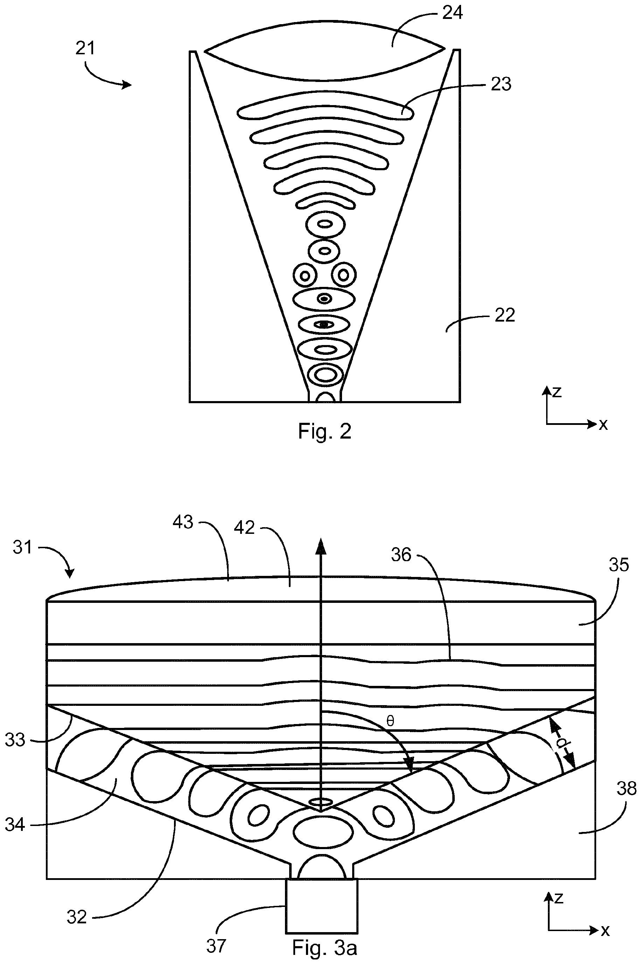

Fig 2 shows a known lens horn antenna arrangement 21 having a typical relation between length (measured in the z-axis direction) and width (measured in the x-axis direction). As can be seen the field 23 gently broadens as the wave propagates along the z-axis and fills the transverse space. A lens 24 corrects the phase front. These horn antennas, which are known in the art, have excellent performance provided there is no space restriction in the longitudinal direction (i.e., in the direction along the z-axis).

One object of the embodiments disclosed herein is to achieve a broad aperture distribution with a horn antenna as short as possible. In order to obtain such a horn antenna there is provided a radar wave guiding arrangement for a vehicle radar system. The features of the radar wave guiding arrangement will be further disclosed below. There is also provided a vehicle comprising such a radar wave guiding arrangement. According to some embodiments the radome is integrated such that it does not perturb the radiation field. According to some embodiments the outside surface of the radome is flat or smoothly curved.

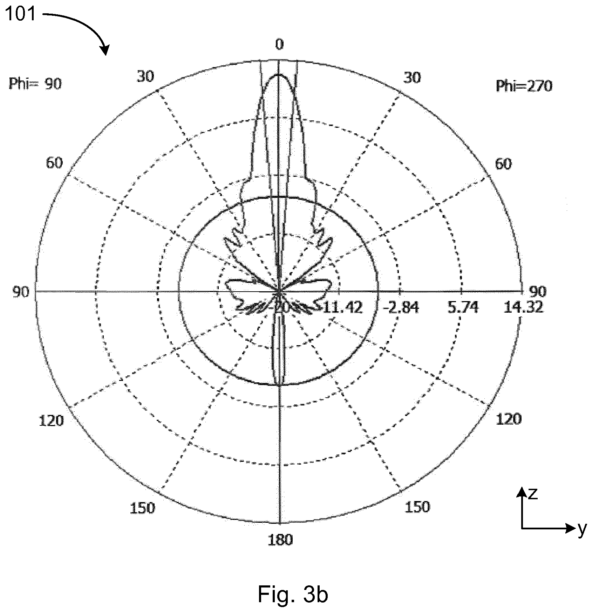

Figs 3a and 3b show the field distribution 36 (Fig 3a) and far field 101 (Fig 3b) of a radar wave guiding arrangement 31 according to an example. Fig 3a schematically illustrates a radar wave guiding arrangement 31 where a dielectric insert 35 may be placed in a horn-shaped housing 38 such that at least one channel 34 is formed.

In more detail, the radar wave guiding arrangement 31 for a vehicle radar system comprises a horn-shaped housing 38. The housing 38 comprises first walls 32. The housing thereby encloses a cavity.

The radar wave guiding arrangement 31 further comprises a dielectric insert 35. The dielectric 35 insert comprises second walls 33. The dielectric insert 35 is positioned inside the cavity. Hence the dielectric insert 35 is at least partly enclosed by the housing 38.

The first walls 32 of the housing 38 and the second walls 33 of the dielectric insert 35 form at least one waveguide channel 34. In Fig 3a the waveguide channel 34 has a width d. The waveguide channel 34 is provided for guiding radar waves through the horn-shaped housing 38. The dielectric insert 35 and the at least one waveguide channel 34 have different wave distribution characteristics.

The disclosed radar wave guiding arrangement 31 may thus comprise a horn with a dielectric cone and an air (or other gas) filled waveguide channel 34 located between the cone (as formed by the dielectric insert 35) and the horn wall (as formed by the housing 38), where the air filled channel serves as a leaky waveguide. In Fig 3b the far field of the electric field component perpendicular to the drawing plane (the xz-plane) of Fig 3a are shown.

According to examples the width (taken in the x-axis direction) is larger than the length (taken in the z-axis direction) of the disclosed radar wave guiding arrangement 31. This yields a compact design of the radar wave guiding arrangement 31.

Examples relating to further details of the radar wave guiding arrangement 31 will now be disclosed.

In general terms, the power in the waveguide channel 34 fades along the direction of propagation (i.e., the z-axis) which is caused by the power transfer into the cone shaped dielectric insert 35 where a wave of a plane phase front perpendicular to the horn axis (i.e., the z-axis) is generated. The condition for this direction of propagation parallel to the horn axis is:

$$\frac{\lambda}{\sqrt{\varepsilon}} = \lambda_H \cos \theta \quad (1)$$

where epsilon ($\varepsilon$) is the dielectric constant, lambda ($\lambda$) is the free space wavelength, theta ($\theta$) is the angle of the channel axis to the horn axis (see, Fig 3a), and lambda$_H$ ($\lambda_H$) is the guide length in the waveguide channel which roughly is determined by:

$$\lambda_H = \frac{1}{\sqrt{\frac{1}{\lambda^2} - \frac{1}{4d^2}}} \quad (2)$$

where d is the width of the waveguide channel.

The radar wave guiding arrangement 31 of Figs 3a and 3b is symmetric respect to the yz-plane, thus providing a symmetrical radiation. Hence, according to an example the radar wave guiding arrangement 31 has a circular symmetric cross-section. This is no longer the case when the direction of propagation includes an angle kappa ($\kappa$) to the horn axis. Equation (1) is thus modified to:

$$\frac{\lambda}{\sqrt{\varepsilon}} = \lambda_{H_1} \cos(\theta_1 - \kappa) = \lambda_{H_2} \cos(\theta_2 - \kappa) \quad (3)$$

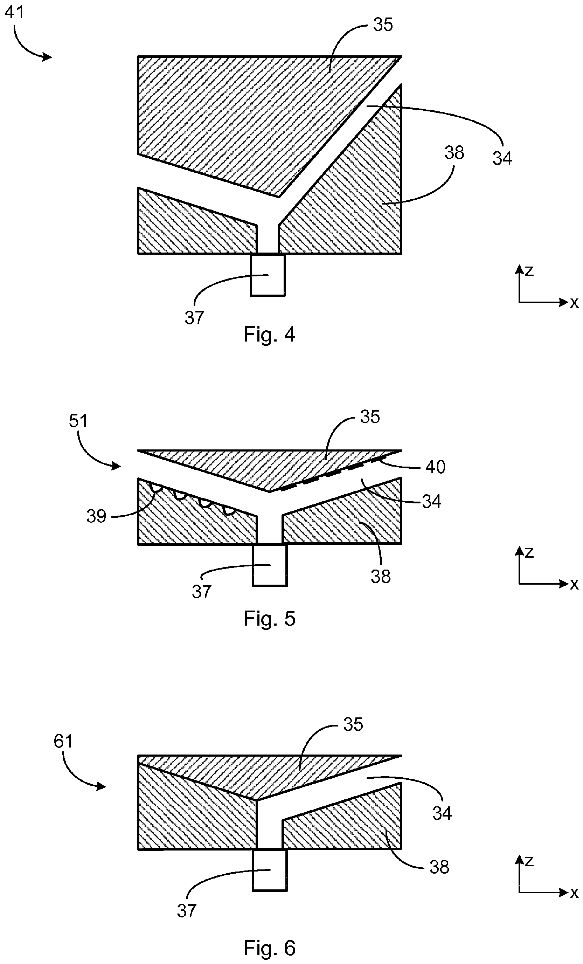

The different expressions comprising cosine-terms correspond to the right ($H_1$) and left ($H_2$) channel, respectively. Both channels may differ in size and/or slope angle. In an alternative example the gaps, or channels, are asymmetrical to yield an asymmetrical radiation. Thus, according to an example the radar wave guiding arrangement comprises at least two asymmetrical channels. Such a radar wave guiding arrangement 41 is illustrated in Fig 4.

Further, the waveguide channel 34 need not be linear. It may be curved; however the width has to be adjusted to satisfy the above equations.

The material filling the waveguide channel 34 need not be air. It may be any other gas, liquid or solid with any dielectric constant epsilon. Thus, according to an example the waveguide channel 34 is gas-filled. In this case equation (2) is modified to:

$$\lambda_H = \frac{1}{\sqrt{\dfrac{1}{\varepsilon \cdot \lambda^2} - \dfrac{1}{4d^2}}} \quad (4)$$

Not only the proper phase distribution in the cone (i.e., in the dielectric insert 35) has to be established but also the required transverse amplitude distribution has to be achieved. Quasi Gaussian or raised cosine distributions typically are desired. One advantage of the disclosed radar wave guiding arrangement 31, 41 is that for constant relative leakage of power from the waveguide channel 34 to the cone (i.e., in the dielectric insert 35) a maximum in the center and decay at the sides is inherently achieved. A fine tailoring of the transverse amplitude distribution takes advantage of the fact that the relative power leakage depends on the angle theta. Thus a nonlinear channel can tailor the transverse field distribution.

To further influence this, power leakage geometric obstacles can be introduced. Such a radar wave guiding arrangement 51 is illustrated in Fig 5. For reducing the leakage the cone (i.e., in the dielectric insert 35) can be covered with metal sheets 40. Thus, according to an embodiment the second walls at least partly are covered with metallic sheets 40. If the space between the sheets 40 is smaller than half of the wavelength for the depicted polarization of the electric field component these sheets 40 act as cut-off guides. To raise coupling, grooves 39 at the cone (i.e., at the second walls 33 of the dielectric insert 35) or the horn (i.e., at the first walls 32 of the housing 38) can be provided. To have an influence their spacing should be about half the wavelength.

Further geometries taking advantage of the disclosed radar wave guiding arrangement principle is a single guide channel instead of the symmetric configuration. Thus, according to an example the radar wave guiding arrangement comprises only one waveguide channel. Such a radar wave guiding arrangement 61 is illustrated in Fig 6.

According to examples the radar wave guiding arrangement 31, 41, 51, 61 comprises a radome 42. The dielectric insert 35 may be part of the radome 42. Hence, the dielectric insert 35 and the radome 42 may be provided as an integral structure. At the end of the waveguide channel 34 the cone (i.e., the dielectric insert 35) may be attached to the horn (i.e., to the first walls of the housing 32) or covers the horn end and thus simultaneously serves as a radome 42.

The radar wave guiding arrangement 31, 41, 51, 61 may further comprise a radar wave generator 37. According to examples the radome 42 and the radar wave generator 37 are positioned at opposite ends of the horn-shaped housing 38. A front side 43 of the radome 42 facing away from the radar wave generator 37 may be flat or smoothly curved. According to examples the components of the radar wave guiding arrangement 31, 41, 51, 61 thus are a cone-shaped metal horn which is mounted to a radar frequency wave-creating power source (generator) at one end and to a radome 42 at the other end. A dielectric insert 35 is mounted to, or integrated with, the radome 42. Generally, due to the change of wave impedance caused by the change of dielectric constant of the radome 42 may lead to an undesired reflection. According to the state of the art this undesired reflection is minimized by choosing the thickness of the radome 42 such that the reflection at the inner radome 42 surface cancels with the reflection of the outer radome 42 surface. The thickness of the radome 42 may be chosen to be multiples of half the wavelength. For the disclosed radar wave guiding arrangement the situation is different. Inherently, due to the conical shape of the dielectric insert 35 the thickness of the radome 42 can generally not be chosen to be half the wavelength. Also a certain reflection at the inner surface is desired, otherwise the waveguide channel 34 would not act as such. That however means that the reflection at the inner and outer surfaces must be treated separately.

At the inner surface the reflection can be adjusted by means of either a thin layer of dielectric material with a dielectric constant being the square root of the product of the dielectric constants of the waveguide channel 34 and the dielectric insert 35, or by providing conical grooves which do not require the need of a second material. Thus, according to an example the second walls 33 comprise grooves. The grooves may be conical shaped. Alternatively the grooves may be triangular shaped.

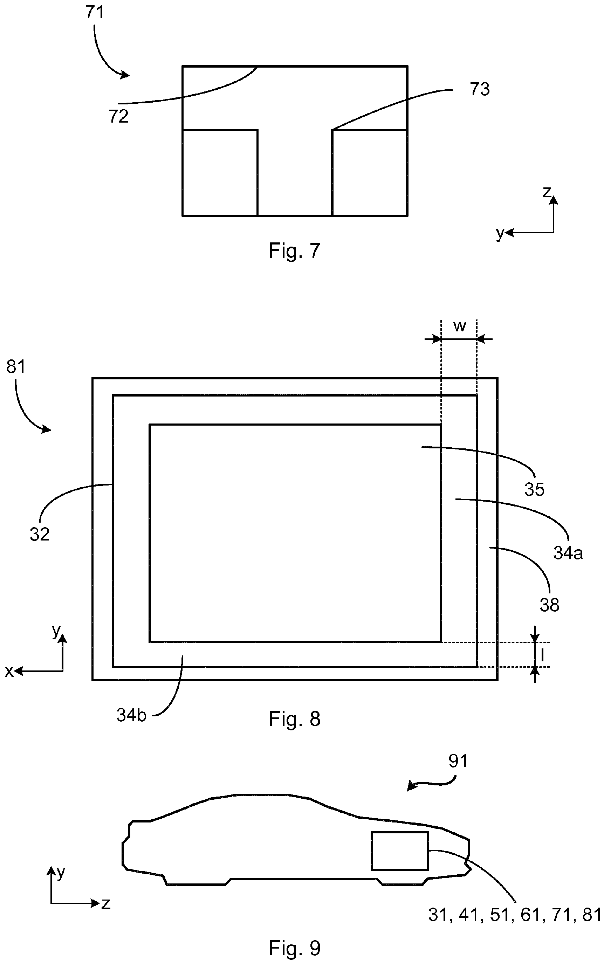

In the lateral direction (i.e., along the z-axis) the housing 38 may be narrow. At the end of the housing 38, but still inside the material, a reflection may occur. The remaining part of the radome 42 may therefore be chosen of a thickness such that the reflection at the housing end and at the outer surface cancel out. Such a radar wave guiding arrangement 71 is illustrated in Fig 7, where the first location 72 of the reflection and the second location 73 of the reflection have been identified. To further control this reflection, the radome 42 and the dielectric insert 35 may be made from different materials. Fixation tabs or the like may be used to fixate the position of the dielectric insert 35 in relation to the housing 38. Thus, according to an example the radar wave guiding arrangement 31, 41, 51, 61, 71, further comprises fixation tabs arranged to fixate the position of the dielectric insert 35 in relation to the horn-shaped housing 38.

Fig 8 illustrates the cross section (i.e., in the xy-plane) of a radar wave guiding arrangement 81. The radar wave guiding arrangement 81 comprises two vertical waveguide channels 34a each having a width w and two horizontal waveguide channels 34b each having a width 1. According to an example 1 is at least one order of magnitude smaller than w; according to a further example l=0. Additionally, although a horn-shaped housing of rectangular geometry is illustrated in Fig 8, the disclosed horn-shaped housing 38 may have a circular shaped or other shape cross section.

The radar wave guiding arrangement 31, 41, 51, 61, 71, 81 may be used for any frequency radar application but preferably for 77 GHz radar applications. Thus, according to an example the radar wave generator 34 is arranged to generate a 77 GHz automotive radar detection signal.

An automotive vehicle may comprise a radar wave guiding arrangement 31, 41, 51, 61, 71, 81 according to any of the above disclosed examples. Fig 9 illustrates an automotive vehicle 91 comprising a radar wave guiding arrangement 31, 41, 51, 61, 71, 81. The radar wave guiding arrangement 31, 41, 51, 61, 71, 81 may thus be part used for, or as an integral part of, a vehicle radar system.

In summary, according to some aspects there has been disclosed a radar wave guiding arrangement 31, 41, 51, 61, 71, 81 for a vehicle radar system comprising a radar wave generator 37, a horn-shaped housing 38 with walls 32 forming a cavity and an dielectric insert 35 positioned inside the cavity, wherein the walls 32 and the dielectric insert 35 form at least one waveguide channel 34 for guiding generated radar waves, and where the dielectric insert 35 and the at least one waveguide channel 34 have different wave distribution characteristics.

## Claims

1. A radar wave guiding arrangement (31, 41, 51, 61, 71, 81) for a vehicle radar system, comprising:

    a horn-shaped housing (38), the housing comprising first walls (32) enclosing a cavity; and
    a dielectric insert (35), the dielectric insert comprising second walls (33) and being positioned inside the cavity;
    wherein the first walls and the second walls form at least one waveguide channel (34) for guiding radar waves through the horn-shaped housing, and wherein the insert and the at least one waveguide channel have different wave distribution characteristics,
    wherein the radar wave guiding arrangement has a width and a length, and wherein the width is larger than the length, which length extends along a longitudinal axis of the arrangement, while the width extends along a cross-sectional axis of the arrangement,
    wherein the second walls at least partly are covered with metallic sheets (40), and the space between the metallic sheets (40) is smaller than half of the wavelength of the radar waves of the radar system so that the metallic sheets (40) act as cut-off guides.

2. The radar wave guiding arrangement according to claim 1, further comprising a radome (42), and wherein the dielectric insert is part of the radome.

3. The radar wave guiding arrangement according to claim 1 or 2, further comprising a radar wave generator (37).

4. The radar wave guiding arrangement according to claim 2 and 3, wherein the radome and the radar wave generator are positioned at opposite ends of the horn-shaped housing.

5. The radar wave guiding arrangement according to claim 4, wherein a front side (43) of the radome facing away from the radar wave generator is flat or smoothly curved.

6. The radar wave guiding arrangement according to claim 3, 4, or 5, wherein the radar wave generator is arranged to generate a 77 GHz automotive radar detection signal.

7. The radar wave guiding arrangement according to any one of the preceding claims, wherein at least one of the first walls and the second walls comprise grooves (39).

8. The radar wave guiding arrangement according to claim 7, wherein the grooves are conical or triangular shaped.

9. The radar wave guiding arrangement according to any one of the preceding claims, further comprising fixation tabs arranged to fixate the position of the dielectric insert in relation to the horn-shaped housing.

10. The radar wave guiding arrangement according to any one of the preceding claims, comprising at least two asymmetrical channels.

11. The radar wave guiding arrangement according to any one of claims 1 to 9, comprising only one waveguide channel.

12. The radar wave guiding arrangement according to any one of the preceding claims, wherein the arrangement has a circular symmetric cross-section.

13. The radar wave guiding arrangement according to any one of the preceding claims, wherein the waveguide channel is gas-filled.

14. An automotive vehicle (91) comprising a radar wave guiding arrangement according to any one of the preceding claims.


**Patentansprüche**

1. Radarwellenleiteranordnung (31, 41, 51, 61, 71, 81) für ein Fahrzeugradarsystem, umfassend:

   ein hornförmiges Gehäuse (38), wobei das Gehäuse erste Wände (32) umfasst, die einen Hohlraum umschließen; und
   einen dielektrischen Einsatz (35), wobei der dielektrische Einsatz zweite Wände (33) umfasst und im Inneren des Hohlraums angeordnet ist;
   wobei die ersten Wände und die zweiten Wände mindestens einen Wellenleiterkanal (34) zum Leiten von Radarwellen durch das hornförmige Gehäuse bilden, und wobei der Einsatz und der mindestens eine Wellenleiterkanal unterschiedliche Wellenverteilungseigenschaften aufweisen,
   wobei die Radarwellenleiteranordnung eine Breite und eine Länge aufweist und wobei die Breite größer als die Länge ist, wobei sich die Länge entlang einer Längsachse der Anordnung erstreckt, während sich die Breite entlang einer Querschnittsachse der Anordnung erstreckt,
   wobei die zweiten Wände zumindest teilweise mit Metallblechen (40) bedeckt sind und der Abstand zwischen den Metallblechen (40) kleiner als die Hälfte der Wellenlänge der Radarwellen des Radarsystems ist, sodass die Metallbleche (40) als Sperrleiter fungieren.

2. Radarwellenleiteranordnung nach Anspruch 1, die ferner ein Radom (42) umfasst, und wobei der dielektrische Einsatz Teil des Radoms ist.

3. Radarwellenleiteranordnung nach Anspruch 1 oder 2, die ferner einen Radarwellengenerator (37) umfasst.

4. Radarwellenleiteranordnung nach Anspruch 2 und 3, wobei das Radom und der Radarwellengenerator an gegenüberliegenden Enden des hornförmigen Gehäuses angeordnet sind.

5. Radarwellenleiteranordnung nach Anspruch 4, wobei eine dem Radarwellengenerator abgewandte Vorderseite (43) des Radoms flach oder leicht gekrümmt ist.

6. Radarwellenleiteranordnung nach Anspruch 3, 4 oder 5, wobei der Radarwellengenerator dafür ausgelegt ist, ein Kraftfahrzeug-Radarerfassungssignal mit 77 GHz zu erzeugen.

7

7. Radarwellenleiteranordnung nach einem der vorhergehenden Ansprüche, wobei mindestens die ersten Wände und/oder die zweiten Wände Rillen (39) aufweisen.

8. Radarwellenleiteranordnung nach Anspruch 7, wobei die Rillen kegel- oder dreieckförmig sind.

9. Radarwellenleiteranordnung nach einem der vorhergehenden Ansprüche, die ferner Fixierungslaschen umfasst, die dafür ausgelegt sind, die Position des dielektrischen Einsatzes in Bezug auf das hornförmige Gehäuse zu fixieren.

10. Radarwellenleiteranordnung nach einem der vorhergehenden Ansprüche, die mindestens zwei asymmetrische Kanäle umfasst.

11. Radarwellenleiteranordnung nach einem der Ansprüche 1 bis 9, die nur einen Wellenleiterkanal umfasst.

12. Radarwellenleiteranordnung nach einem der vorhergehenden Ansprüche, wobei die Anordnung einen kreissymmetrischen Querschnitt aufweist.

13. Radarwellenleiteranordnung nach einem der vorhergehenden Ansprüche, wobei der Wellenleiterkanal mit Gas gefüllt ist.

14. Kraftfahrzeug (91), umfassend eine Radarwellenleitungsanordnung nach einem der vorhergehenden Ansprüche.


**Revendications**

1. Dispositif de guide d'ondes radar (31, 41, 51, 61, 71, 81) pour un système radar de véhicule, comprenant :

   un boîtier en forme de cornet (38), le boîtier comprenant des premières parois (32) enfermant une cavité ; et
   un insert diélectrique (35), l'insert diélectrique comprenant des deuxièmes parois (33) et étant positionné à l'intérieur de la cavité ;
   dans lequel les premières parois et les deuxièmes parois forment au moins un canal de guide d'ondes (34) pour guider des ondes radar à travers le boîtier en forme de cornet, et dans lequel l'insert et l'au moins un canal de guide d'ondes ont différentes caractéristiques de distribution d'ondes,
   dans lequel le dispositif de guide d'ondes radar a une largeur et une longueur, et dans lequel la largeur est supérieure à la longueur, laquelle longueur s'étend le long d'un axe longitudinal du dispositif, alors que la largeur s'étend le long d'un axe de section transversale du dispositif,
   dans lequel les deuxièmes parois sont au moins partiellement recouvertes de feuilles métalliques (40), et l'espace entre les feuilles métalliques (40) est inférieur à la moitié de la longueur d'onde des ondes radar du système radar de sorte que les feuilles métalliques (40) font office de guides de coupure.

2. Dispositif de guide d'ondes radar selon la revendication 1, comprenant en outre un radôme (42), et dans lequel l'insert diélectrique fait partie du radôme.

3. Dispositif de guide d'ondes radar selon la revendication 1 ou 2, comprenant en outre un générateur d'ondes radar (37).

4. Dispositif de guide d'ondes radar selon les revendications 2 et 3, dans lequel le radôme et le générateur d'ondes radar sont positionnés à des extrémités opposées du boîtier en forme de cornet.

5. Dispositif de guide d'ondes radar selon la revendication 4, dans lequel un côté avant (43) du radôme tournant le dos au générateur d'ondes radar est plat ou légèrement courbe.

6. Dispositif de guide d'ondes radar selon les revendications 3, 4 ou 5, dans lequel le générateur d'ondes radar est étudié pour générer un signal de détection radar d'automobile de 77 GHz.

7. Dispositif de guide d'ondes radar selon l'une quelconque des revendications précédentes, dans lequel au moins l'une parmi les premières parois et les deuxièmes parois comprennent des rainures (39).

8. Dispositif de guide d'ondes radar selon la revendication 7, dans lequel les rainures sont de forme conique ou triangulaire.

**9.** Dispositif de guide d'ondes radar selon l'une quelconque des revendications précédentes, comprenant en outre des languettes de fixation étudiées pour fixer la position de l'insert diélectrique par rapport au boîtier en forme de cornet.

**10.** Dispositif de guide d'ondes radar selon l'une quelconque des revendications précédentes, comprenant au moins deux canaux asymétriques.

**11.** Dispositif de guide d'ondes radar selon l'une quelconque des revendications 1 à 9, comprenant seulement un canal de guide d'ondes.

**12.** Dispositif de guide d'ondes radar selon l'une quelconque des revendications précédentes, dans lequel le dispositif a une section transversale symétrique circulaire.

**13.** Dispositif de guide d'ondes radar selon l'une quelconque des revendications précédentes, dans lequel le canal de guide d'ondes est rempli de gaz.

**14.** Véhicule automobile (91) comprenant un dispositif de guide d'ondes radar selon l'une quelconque des revendications précédentes.

Fig. 1a

Fig. 1b

Fig. 2

Fig. 3a

Fig. 3b

Fig. 4

Fig. 5

Fig. 6

71

72

73

z

y

Fig. 7

w

81

32

35

34a

38

y

x

34b

Fig. 8

91

y

z

31, 41, 51, 61, 71, 81

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120206312 A1

### Non-patent literature cited in the description

- **B. PHILIPS ; A. D. OLIVER.** Design and performance of profiled dielectric loaded horns. *IEE Proceedings of Microwaves, Antennas and Propagation,* 01 October 1994, vol. 141 (5), 337-341

- **HONGMIN LEE ; HYUNGSUP LEE.** A Compact Dielectric Rod-loaded Conical Horn Antenna for Millimeter-Wave Applications. *proceedings of the 2012 5th Global Symposium on Millimeter Waves,* 27 May 2012, 182-185